Europäisches Patentamt

European Patent Office

Office européen des brevets

(19)

(11) Veröffentlichungsnummer : **0 122 335**
**B1**

(12) **EUROPÄISCHE PATENTSCHRIFT**

(45) Veröffentlichungstag der Patentschrift :
28.06.89

(21) Anmeldenummer : 83113238.6

(22) Anmeldetag : 30.12.83

(51) Int. Cl.⁴ : **A 47 K   3/22**

(54) **Profilschiene.**

(30) Priorität : 22.03.83 DE 3310225

(43) Veröffentlichungstag der Anmeldung :
24.10.84 Patentblatt 84/43

(45) Bekanntmachung des Hinweises auf die Patenterteilung : 28.06.89 Patentblatt 89/26

(84) Benannte Vertragsstaaten :
AT BE CH FR GB IT LI NL SE

(56) Entgegenhaltungen :
DE--A-- 2 711 826
DE--A-- 2 740 374
DE--U-- 7 336 675
DE--U-- 8 013 940
US--A-- 4 392 272

(73) Patentinhaber : B.V. LEIDSE HOUTHANDEL v/h Kater en Wiethoff
Helmstraat 2
Maastricht (NL)

(72) Erfinder : Baus, Heinz Georg
Wartbodenstrasse 35
CH-3626 Hünibach-Thun (CH)

(74) Vertreter : Klose, Hans, Dipl.-Phys.
Kurfürstenstrasse 32
D-6700 Ludwigshafen (DE)

## Beschreibung

Die Erfindung bezieht sich auf ein Bauelement, insbesondere für eine Duschtrennwand, gemäß den im Oberbegriff des Patentanspruchs 1 angegebenen Merkmalen.

In dem DE-U-80 13 940 ist ein Bauelement der genannten Art beschrieben, bei welchem die einem Betrachter zugewandte sichtbare Außenfläche der Profilschiene eine Führungsnut aufweist. In diese Führungsnut ist ein Verblendungsprofil aus Metall, Kunststoff, Holz oder dergleichen eingesetzt. Die Führungsnut weist Hinterschneidungen auf, um mittels des elastischen Verbindungselements die Befestigung des Verblendungsprofils in der Profilschiene zu ermöglichen. Wird das Verbindungselement in Längsrichtung der Profilschiene in die Führungsnut eingeschoben, so können infolge von Reibungskräften Schwierigkeiten auftreten. Die Rastelemente des Verbindungselements sind an den federnden Armen angeordnet. Bei der Fertigung müssen enge Toleranzen eingehalten werden, um einerseits das Verbindungselement ohne allzu hohen Kraftaufwand in die Führungsnut einsetzen zu können und andererseits einen lockeren Sitz des Verblendungsprofils sowie des Verbindungselements in der Profilschiene zu vermeiden. Vorsprünge und Rastelemente des Verbindungselements sind praktisch ein und dieselben Teile und aufgrund dieser Doppelfunktion müssen bei der Dimensionierung Kompromisse eingegangen werden, welche in der Praxis zu nicht unerheblichen Schwierigkeiten führen können. Die Profilschiene wird regelmäßig aus Aluminium oder einem vergleichbaren Werkstoff im Strangpreßverfahren hergestellt und es ist bei der Serienfertigung mit einem entsprechenden Verschleiß der Matritzen bzw. der Preßwerkzeuge zu rechnen. Aufgrund der vergleichsweise großen Kosten für derartige Werkzeuge besteht die Forderung nach möglichst großen Toleranzbereichen, um eine wirtschaftliche Fertigung zu ermöglichen. Die gleichen Voraussetzungen sind auch bei der Fertigung des Verbindungselements und des Verblendungsprofils zu beachten. Bei zu großen Toleranzen besteht die Gefahr, daß im ungünstigsten Falle sich die Toleranzen der Profilschiene, des Verbindungselements sowie des Verblendungsprofils addieren, wobei entweder das Verblendungsprofil nicht mehr in die Führungsnut eingesetzt werden kann oder in dieser nicht mehr zuverlässig gehalten wird.

Der Erfindung liegt die Aufgabe zugrunde, das Bauelement der genannten Art dahingehend weiterzubilden, daß trotz Toleranzungenauigkeiten das Einsetzen des Verbindungselementes in die Profilschiene zuverlässig möglich ist und gleichwohl eine stabile Rastverbindung des Verblendungsprofils mittels des Verbindungselements in der Führungsnut gewährleistet ist.

Die Lösung dieser Aufgabe erfolgt gemäß den im Kennzeichen des Patentanspruchs 1 angegebenen Merkmalen.

Das vorgeschlagene Bauelement ermöglicht einen festen Sitz des Verblendungsprofils, wobei fertigungsbedingte Toleranzen ausgeglichen werden. Es können relativ große Toleranzbereiche für die Führungsnut der Profilschiene, das Verbindungselement sowie das Verblendungsprofil zugelassen werden. Aufgrund der unabhängigen Ausbildung des federnden Armes einerseits und des Rastelementes andererseits können diese unabhängig voneinander dimensioniert und vorgegeben werden, wobei sich deren Fertigungstoleranzen nicht addieren können. Auch bei relativ großen zugelassenen Fertigungstoleranzen ist ein einfaches Einsetzen und gleichwohl eine stabile Verbindung zwischen Verblendungsprofil und Profilschiene gewährleistet. Da das Rastelement an einem nach außen zum Verblendunksprofil gerichteten Steg des Verbindungselements angeordnet ist und einen mit dem Rastelement des Verblendungsprofils in Eingriff stehenden Ansatz aufweist, kann das Verblendungsprofil in einfacher Weise und schnell in die Profilschiene eingesetzt werden. Das Verblendungsprofil und das Verbindungselement weisen jeweils einen einfachen und kostengünstigen Aufbau auf und können leicht in die gewünschte Position zueinander gebracht werden. Der Steg und die Rastelemente können im Querschnitt und in ihrer Größe ohne weiteres derart dimensioniert werden, daß das Verblendungsprofil einerseits leicht eingesetzt werden kann und andererseits zuverlässig in der Profilschiene gehalten wird. Da das Rastelement des Verblendungsprofils mit seinem inneren Endteil auf dem Verbindungselement aufliegt wird in einfacher Weise eine sichere Auflagerung gewährleistet. Auch beim Einwirken von vergleichsweise großen Kräften auf das Verblendungsprofil kann ein Verbiegen oder eine Beschädigung des Verblendungsprofils vermieden werden. Das Verbindungselement wird mittels des federnden Armes spielfrei in der Führungsnut der Profilschiene gehaltert und insgesamt wird eine spielfreie Befestigung des Verblendungsprofils in der Führungsnut der Profilschiene zuverlässig sichergestellt.

Eine besondere Ausgestaltung, bei welcher das Verbindungselement ein auf der Bodenfläche der Führungsnut aufliegendes Mittelteil aufweist, ist dadurch gekennzeichnet, daß der federnde Arm über einen seitlichen Bogen mit dem Mittelteil verbunden ist. Der federnde Arm kann mit einer Vorspannung an der Innenfläche der Hinterschneidung der Profilschiene anliegen, wobei das zweckmäßig als eine schmale Leiste ausgebildete Mittelteil des Verbindungselements praktisch unverschiebbar auf der Bodenfläche der Führungsnut aufliegt. Der seitliche Bogen weist zur Seitenfläche der Hinterschneidung einen entsprechenden Abstand auf, damit zuverlässig die federnde Bewegbarkeit des Armes gewährleistet wird.

In einer weiteren Ausführungsform ist der Arm des Verbindungselements mit seinem Endteil am Verblendungsprofil abgestützt. Hierdurch wird das Einsetzen des Verbindungselements in die Führungsnut nicht unwesentlich vereinfacht, denn der Arm kann relativ weich federnd ausgebildet sein. Wird das Verblendungsprofil eingesetzt, so wird der Arm von dem Verblendungsprofil fest in die Hinterschneidung hineingedrückt. Es ist ersichtlich, daß nunmehr der Arm eine vergleichsweise große Steifigkeit aufweisen wird.

Um das Einsetzen des Verblendungsprofils in die Profilschiene zu vereinfachen, liegt der Arm mit seinem Ende an der zur Mittenebene im wesentlichen parallelen Seitenfläche des Rastelements vom Verblendungsprofil an. Es ist somit eine zuverlässige Abstützung des elastisch federnden Armes an dem Rastelement gegeben, wobei während des Einsetzens auch keine übermäßig großen Kräfte aufgebracht werden müssen.

In einer besonderen Ausgestaltung ist das Verblendungsprofil als eine dünne Leiste ausgebildet und es weist seitlich jeweils das Rastelement auf. Das Verblendungsprofil kann mit vergleichsweise einfachen Werkzeugen und mit geringem Materialeinsatz kostengünstig gefertigt werden und es weist einen bezüglich der Mittenebene symmetrischen Aufbau auf.

In einer besonders wesentlichen Ausgestaltung ist das Verbindungselement in Richtung der Längsachse in die Profilschiene einschiebbar und das Verblendungsprofil von der Außenfläche her senkrecht zur Längsachse in die Profilschiene einsetzbar. Werkseitig wird das Verbindungselement in die Profilschiene eingeschoben und es ist bei einer nachfolgenden Bearbeitung der Profilschiene und insbesondere bei einem Zusammenbau zu einer Duschtrennwand das Verbindungselement zuverlässig in der Profilschiene gehalten und kann auch beim Tansport nicht mehr verloren gehen. Wird dann die Profilschiene oder der aus der Profilschiene gefertigte Gegenstand vorort irgendwo eingebaut, so kann dies zunächst ohne das Verblendungsprofil erfolgen. Eine Beschädigung des Verblendungsprofils wird zuverlässig vermieden. Erst wenn alle bauseits erforderlichen Maßnahmen und Tätigkeiten abgeschlossen sind, kann dann das jeweilige Verblendungsprofil in einfacher Weise in die Profilschiene eingesetzt werden. Aufgrund dieser Ausgestaltung kann ggfs. auch nach einiger Zeit wieder das Verblendungsprofil entfernt und gegen ein anderes Verblendungsprofil ausgetauscht werden. Das Verbindungselement bleibt hierbei immer fest in der Führungsnut bzw. der Profilschiene sitzen.

Das Bauelement wird nachfolgend an Hand der in der Zeichnung dargestellten Ausführungsbeispiele näher erläutert. Es zeigen :

Fig. 1 eine perspektivische Ansicht einer Trennwand, deren Rahmen aus Profilschienen besteht,

Fig. 2 vergrößert einen Schnitt entlang Schnittlinie II gemäß Fig. 1,

Fig. 3 eine Vergrößerung des rechten Teiles der Profilschiene gemäß Fig. 2.

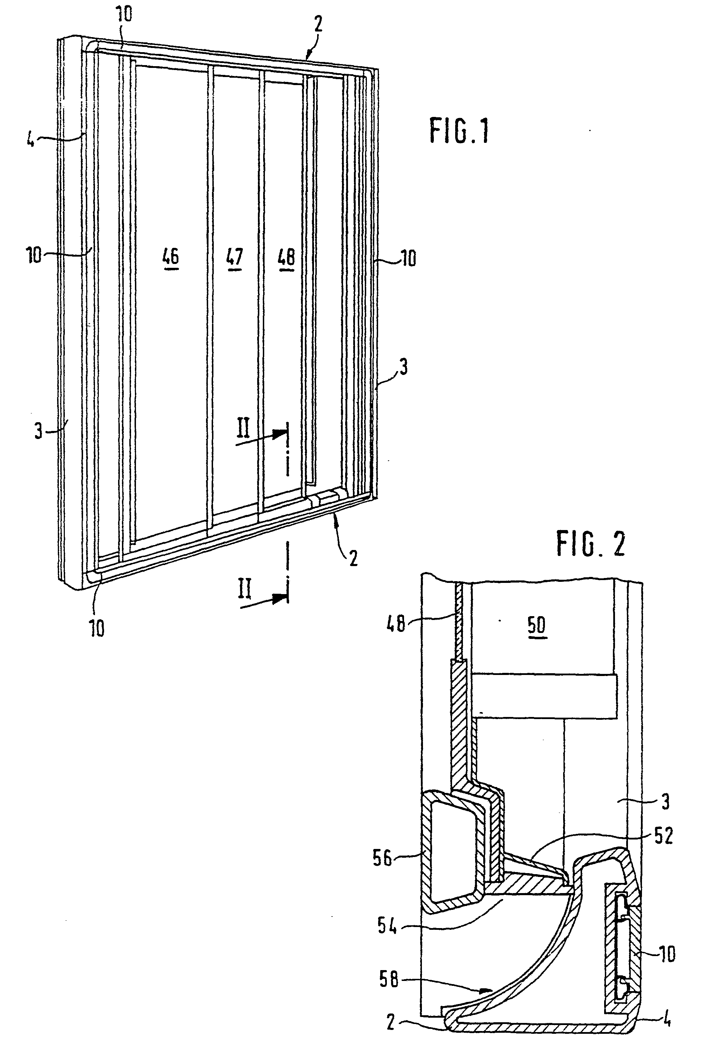

Fig. 1 zeigt schematisch eine Trennwand, die einen Rahmen aus vier rechtwinklig angeordneten Profilschienen 2, 3 aufweist. Diese Trennwand wird im allgemeinen mit ihrer unteren Profilschiene 2 auf den Rand einer Wanne aufgesetzt und die vertikalen Profilschienen 3 werden an einer hier nicht weiter dargestellten Raumwand befestigt, oder es werden weitere Trennwände an diese vertikalen Profilschienen 3 angeschlossen. In der oberen horizontalen Profilschiene 2 sind drei Türelemente 46, 47, 48 in horizontaler Richtung verschiebbar angeordnet. Hierzu sind geeignete Führungsschienen und Rollen in bekannter Weise vorgesehen, die hier nicht weiter erläutert werden sollen. Der Rahmen bzw. die Profilschiene 2, 3 weisen an der einem Betrachter sichtbaren Außenfläche 4 jeweils ein Verblendungsprofil 10 auf. Jedes Verblendungsprofil ist, wie nachfolgend noch zu erläutern ist, mit der zugeordneten Profilschiene verbunden.

Fig. 2 zeigt vergrößert einen Schnitt durch die untere horizontale Profilschiene 2 und ein Teil des Türelements 48. Von dem Türelement 48 ist ferner eine in vertikaler Richtung verlaufende Griffleiste 50 zu erkennen. Die vertikale Profilschiene 3 ist mit der unteren Profilschiene 2 mittels hier nicht weiter dargestellten Schraubverbindungen verbunden. Am unteren Ende des Türelements 48 ist ein Führungskörper 52 vorgesehen, der in einen Führungsschlitz 54 eingreift. Der Führungsschlitz 54 befindet sich zwischen dem hinteren Rand der unteren Profilschiene 2 und einem weiteren schwenkbar angeordneten Profil 56. In der dargestellten Position des Profils 56 läßt sich das Türelement 48 in horizontaler Richtung, also senkrecht zur Zeichenebene, in gewohnter Weise hin- und herschieben. Durch Wegschwenken des Profils 56 kann das Türelement 48 und entsprechend auch die anderen oben erwähnten Türelemente aus der dargestellten Position nach links weggeschwenkt werden. Die Profilschiene 2 ist als ein Hohlprofil ausgebildet, welches einen etwa dreieckförmigen Querschnitt aufweist. Die Innenwand 58 der Profilschiene 2 ist abgerundet bzw. nach innen geneigt. Die sich an die Führungsnut seitlich anschließenden Bereiche der Außenfläche 4 sind geneigt angeordnet.

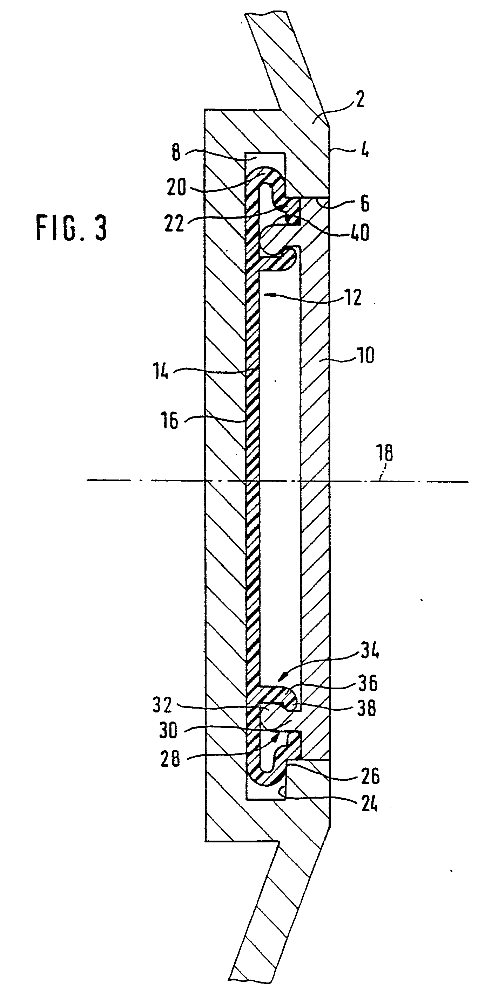

Fig. 3 zeigt vergrößert den rechten Teil der Profilschiene 2 gemäß Fig. 2. Die Profilschiene 2 weist an ihrer Außenfläche 4 eine hinterschnittene Führungsnut 6 auf, welche zwei seitliche Hinterschneidungen 8 enthält. Die hier dargestellte Führungsnut 6 weist einen in etwa T-förmigen Querschnitt auf, doch können auch andere Querschnittsformen, genannt sei hier beispielshaft ein Schwalbenschwanz-Querschnitt, vorhanden sein. Mit der Außenfläche 4 bündig ist ein Verblendungsprofil 10 in die Führungsnut 6 eingesetzt. Das Verblendungsprofil 10 kann auch eine andere Oberflächengestaltung aufweisen.

Im Inneren der Führungsnut 6 befindet sich ein Verbindungselement 12, welches mit seinem Mittelteil 14 auf der Bodenfläche 16 der Führungsnut 6 aufliegt. Verblendungsprofil 10, Führungsnut 6 und auch Verbindungselement 12 sind symmetrisch bezüglich einer Mittenebene 18 ausgebildet. Das Verbindungselement 12 weist zwei seitliche Vorsprünge mit jeweils einem Bogen 20 und einem Arm 22 auf. Der Arm 22 ist nach innen zur Mittenebene 18 gerichtet und liegt zumindest teilweise an der Innenfläche 24 der Hinterschneidung 8 an. Das Verbindungselement 12 besteht aus einem elastisch, federnden Material, bevorzugt aus PVC-weich, mit einer den jeweiligen Bedingungen entsprechenden Shore-Härte. Aufgrund der elastisch federnden Arme 22 ist das Verbindungselement 12 spielfrei in der Führungsnut 6 angeordnet. Der Arm 22 drückt mit einer Vorspannkraft gegen die Längskante 26 der Profilschiene 2 und/oder die Innenfläche 24 der Hinterschneidung 8. Eine definierte Ausrichtung und Fixierung des Verbindungselements 12 ist erreicht.

Das Verblendungsprofil 10 weist in beiden Seitenbereichen jeweils ein Rastelement 28 auf, welches einen nach innen zur Bodenfläche 16 gerichteten Steg 30 mit einem erweiterten Endteil 32 enthält. Das Endteil 32 liegt auf dem Verbindungselement 12 auf, wodurch eine sichere Auflagerung erreicht wird. Das Endteil 32 ist zur Mittenebene 18 hin erweitert. Das Verbindungselement 12 weist ein zugeordnetes Rastelement 34 mit einem nach außen gerichteten Steg 36 und einem Ansatz 38 auf. Der Ansatz 38 übergreift teilweise das Endteil 32. Zumindest das Rastelement 34 vom Verbindungselement 12 ist federnd elastisch, doch kann im Rahmen der Erfindung zusätzlich oder alternativ auch das Rastelement 28 elastisch ausgebildet sein. Aufgrund der federnden Ausbildung des oder der Rastelemente wird eine feste und spielfreie Arretierung des Verblendungsprofils 10 bezüglich des Verbindungselements 12 erreicht. Insgesamt werden aufgrund der erläuterten Ausgestaltung Herstellungstoleranzen und/oder Fertigungsungenauigkeiten derart ausgeglichen, daß das Verblendungsprofil 10 fest in der Profilschiene 2 gehalten wird. Die von der Mittenebene 18 entfernt liegenden Bereiche der Profilschiene 2 sind unter einem vorgegebenen Winkel geneigt angeordnet.

Das Verbindungselement 12 wird in Richtung der senkrecht zur Zeichenebene stehenden Längsachse in die Profilschiene 2 eingeschoben. Ein unbeabsichtigtes Herauslösen bei der weiteren Bearbeitung der Profilschiene wird vermieden. Das Verblendungsprofil 10 kann nachträglich in die Profilschiene 2 bzw. deren Außenfläche 4 eingesetzt werden. Das Rastelement 28 der Profilschiene 10 weist eine zur Mittenebene 18 im wesentlichen parallele Seitenfläche 40 auf. An dieser Seitenfläche liegt der Arm 22 mit seinem Ende an. Solange das Verblendungsprofil 10 noch nicht eingesetzt ist, kann der Arm 22 frei federn, wodurch eine vergleichweise geringe Steifigkeit gegeben ist. Es wird somit das Einschieben des Verblendungselements 12 in die Führungsnut 6 nicht unwesentlich erleichtert. Wird nachfolgend das Verblendungsprofil 10 in der erläuterten Weise eingesetzt, so drückt auch das Rastelement 28 mit seiner Seitenfläche 40 den Arm an die Längskante 26 und/oder die Innenfläche 24 der Hinterschneidung 8. Nunmehr ist eine feste Verankerung und Abstützung erreicht. Es ist bei eingesetztem Verblendungsprofil eine erhöhte Steifigkeit bzw. Vorspannkraft gegeben.

**Patentansprüche**

1. Bauelement, insbesondere für eine Duschtrennwand mit einer Profilschiene (2), die in einer sichtbaren Außenfläche (4) eine hinterschnittene Führungsnut (6) aufweist, und mit einem Verblendungsprofil (10), welches mittels eines elastischen Verbindungselements (12) in der Führungsnut (6) angeordnet ist, wobei das Verbindungselement (12) mit einem seitlichen Vorsprung in eine Hinterschneidung (8) der Profilschiene eingreift und unter einer vorwählbaren Vorspannung in der Hinterschneidung (8) gehalten ist, wobei der Vorsprung einen zur Mittenebene (18) weisenden, federnden Arm (22) aufweist und wobei das Verblendungsprofil (10) und das Verbindungselement (12) mittels ineinandergreifenden, federnden Rastelementen (28, 34) miteinander verbunden sind, dadurch gekennzeichnet, daß das Rastelement (34) des Verbindungselements (12) unabhängig von dem federnden Arm (22) des Vorsprunges angeordnet ist, daß das Rastelement (34) an einem nach außen zum Verblendungsprofil (10) gerichteten Steg (36) des Verbindungselements (12) angeordnet ist und einen mit dem Rastelement (28) des Verblendungsprofils (10) in Eingriff stehenden Ansatz (38) aufweist, und daß das Kastelement (28) des Verblendungsprofils (10) mit seinem inneren Endteil (32) auf dem Verbindungselement (12) aufliegt.

2. Bauelement nach Anspruch 1, wobei das Verbindungselement (12) ein auf der Bodenfläche (16) der Führungsnut (6) aufliegendes Mittelteil (14) aufweist, dadurch gekennzeichnet, daß der federnde Arm (22) über einen seitlichen Boden (20) mit dem Mittelteil (14) verbunden ist.

3. Bauelement nach Anspruch 1 oder 2, dadurch gekennzeichnet, daß der Ansatz (38) des Rastelementes (34) den an einem Steg (30) des Verblendungsprofils (10) angeordneten Endteil (32) teilweise übergreift.

4. Bauelement nach einem der Ansprüche 1 bis 3, dadurch gekennzeichnet, daß der Arm (22) des Verbindungselementes (12) mit seinem Endteil (38) am Verblendungsprofil (10) abgestützt ist.

5. Bauelement nach einem der Ansprüche 1 bis 4, dadurch gekennzeichnet, daß der Arm (22) mit seinem Ende an einer zur Mittenebene (18) im wesentlichen parallelen Seitenfläche (40) des Rastelementes (28) des Verblendungsprofils (10) anliegt.

6. Bauelement nach einem der Ansprüche 1 bis 5, dadurch gekennzeichnet, daß das Verblendungsprofil (10) als eine dünne Leiste ausgebildet ist und im Bereich seiner beiden Längsseiten jeweils das Rastelement (28) aufweist.

7. Bauelement nach einem der Ansprüche 1 bis 6, dadurch gekennzeichnet, daß das Verbindungselement (12) in Längsrichtung der Profilschiene (2) in die Führungsnut (6) einschiebbar ist und daß das Verblendungsprofil (10) in Richtung auf die Außenfläche (4) senkrecht zur Längsachse in die Führungsnut (6) einsetzbar ist.

## Claims

1. Construction unit, especially for a shower partition, with a rail section (2) having an undercut guide channel (6) in a visible outer surface (4), and with a facing section (10), located in the guide channel (6) by means of a resilient connecting element (12), the connecting element (12) engaging in an undercut (9) of the sectional bar with a lateral projection and being held in the undercut (9) by a preselectable initial stressing force, said projection having a resilient arm (22) facing the medial plane (10), and the facing section (10) and the connecting element (12) being connected with each other by interlocking, resilient locking elements (28, 34), characterised in that, that the locking element (34) of the connecting element (12) is arranged independently of the resilient arm (22) of the projection, that the locking element (34) is disposed on a web (36) of the connecting element (12) facing outwardly towards the facing section (10) and has an extension (38) engaging with the locking element (28) of the facing section (10), and that the locking element (28) of the facing section (10) abuts with its inner end portion (32) on the connecting element (12).

2. Construction unit according to claim 1, the connecting element (12) having a centre portion (14) abutting on the base (16) of the guide channel (6), characterised in that, that the resilient arm (22) is connected with the centre portion (14) by a lateral arch (20).

3. Construction unit according to claim 1 or 2, characterised in that, that the extension (38) of the locking element (34) engages partly over the end portion (32) provided on a web (30) of the facing section (10).

4. Construction unit according to any one of claims 1 to 3, characterised in that, that the arm (22) of the connecting element (12) is supported with its end portion (38) on the facing section (10).

5. Construction unit according to any one of claims 1 to 4, characterised in that, that the arm (22) abuts with its end on one side surface (40) of the locking element (28) of the facing section (10), the side surface being substantially parallel to the medial plane.

6. Construction unit according to any one of claims 1 to 5, characterised in that, that the facing section (10) is formed as a narrow strip, having in the region of each of its two longitudinal sides the locking element (28).

7. Construction unit according to any one of claims 1 to 6, characterised in that, that the connecting element (12) can be pushed into the guide channel (6) in the lengthwise direction of the sectional bar (2) and that the facing section (10) can be inserted into the guide channel (6) in the direction of the outer surface (4) at right angles to the longitudinal axis.

## Revendications

1. Elément de construction, notamment pour une cloison de douche, comprenant un profilé (2) qui présente une rainure de guidage à contre-dépouille (6) dans une surface extérieure visible (4), et un bandeau (10) qui est monté dans la rainure de guidage (6) au moyen d'un élément d'assemblage élastique (12), le profilé d'assemblage (12) étant engagé par une saillie latérale dans une contre-dépouille (8) du profilé, et étant retenu dans la contre-dépouille (8) sous une précontrainte pouvant être choisie à l'avance, la saillie présentant un bras élastique (22) dirigé vers le plan médian (18), le bandeau (10) et l'élément d'assemblage (12) étant assemblés l'un à l'autre au moyen d'éléments de verrouillage élastiques (28, 34) qui s'engagent l'un dans l'autre, caractérisé en ce que l'élément de verrouillage (34) de l'élément d'assemblage (12) est agencé indépendamment du bras élastique (22) de la saillie, et que l'élément de verrouillage (34) est agencé sur une nervure (36) de l'élément d'assemblage (12) dirigé vers l'extérieur, vers le bandeau (10), et présente un talon (38) qui est en prise avec l'élément de verrouillage (38) du bandeau (10) et en ce que l'élément de verrouillage (28) du bandeau (10) est en appui sur l'élément d'assemblage (12) par sa partie terminale inférieure (32).

2. Elément de construction selon la revendication 1, dans lequel l'élément d'assemblage (12) présente une partie centrale (14) qui s'appuie sur la surface de fond (16) de la rainure de guidage (6), caractérisé en ce que le bras élastique (22) est relié à la partie centrale (14) par l'intermédiaire d'une anse latérale.

3. Elément de construction selon la revendication 1 ou 2, caractérisé en ce que le talon (38) de l'élément de verrouillage (34) recouvre partiellement la partie terminale (32) agencée sur une nervure (30) du bandeau (10).

4. Elément de construction selon une des revendications 1 à 3, caractérisé en ce que le bras (22) de l'élément d'assemblage (12) prend appui contre le bandeau (10) par sa partie terminale (38).

5. Elément de construction selon une des revendications 1 à 4, caractérisé en ce que le bras (22) est en appui par son extrémité contre une surface latérale (40) de l'élément de verrouillage (28) du bandeau (10) qui est sensiblement parallèle au plan médian (18).

6. Elément de construction selon une des revendications 1 à 5, caractérisé en ce que le bandeau (10) est constitué par une languette · mince et présente l'élément de verrouillage (28) dans la région de chacun de ses côtés longitudinaux.

7. Elément de construction selon une quelconque des revendications 1 à 6, caractérisé en ce que l'élément d'assemblage (12) peut être emmanché dans la rainure de guidage (6) dans la direction longitudinale du profilé (2) et en ce que le bandeau (10) peut être encastré dans la rainure de guidage (6) par un mouvement dirigé vers la surface extérieure (4), perpendiculairement à l'axe longitudinal.

FIG.1

10 2

4

10 46 47 48 10

II

3 3

II II

10

2

10

FIG. 2

48 50

3

56 52

54

58

10

2 4

FIG. 3